# EUROPÄISCHE PATENTSCHRIFT

(11) **EP 3 591 215 B1**
(45) Veröffentlichungstag und Bekanntmachung des Hinweises auf die Patenterteilung: **28.07.2021**
(21) Anmeldenummer: 19177279.7
(22) Anmeldetag: 29.05.2019
(51) Int. Cl.: F03B 3/04

(54) **ANLAGE ZUR ENERGIEGEWINNUNG MIT EINER WASSERTURBINE**
INSTALLATION FOR PRODUCING ENERGY WITH A HYDRAULIC TURBINE
SYSTÈME DE COLLECTE D'ÉNERGIE À L'AIDE D'UNE TURBINE À EAU

(30) Priorität: 03.07.2018 AT 505682018
(43) Veröffentlichungstag der Anmeldung: 08.01.2020
(73) Patentinhaber: Andritz Hydro GmbH, 1120 Wien (AT)
(72) Erfinder: WURM, Erich, 4232 Hagenberg (AT); NENNEMANN, Bernd, Pointe-Claire, QC H9S 4Y5 (CA)
(74) Vertreter: Tschinder, Thomas

(56) Entgegenhaltungen:
- AT-B- 284 034
- CH-A- 175 431
- DE-A1- 1 503 279
- US-A- 4 017 211

## Beschreibung

Die Erfindung betrifft eine Anlage zur Energiegewinnung mit einer Kaplan-, Rohr-, Diagonal- oder Propellerturbine, einem Wasserzulauf und einem Wasserablauf.

Als Wasserturbine kommen hier insbesondere Kaplanturbinen, Diagonalturbinen, Propellerturbinen und Rohrturbinen in Frage. Im unteren Leistungsbereich der Turbinen, d.h. bei Start, geringer Leistung oder einem Schleusen- oder Segelbetrieb bei dem Wasser über die Turbinen geführt wird, ohne Turbinenleistung zu erzeugen, kommt es aufgrund von Wirbelbildungen im Zulauf zwischen Leit- und Laufrad der Turbine zu starken Druckschwankungen, die zu Vibrationen führen. Dadurch wird der Einsatzbereich der Turbine eingeschränkt.

Bei Francisturbinen sind z.B. aus der EP2399022A1 drehbare Leitschaufeln im Wasserablauf bekannt, um die Durchströmung zu stabilisieren. Ebenfalls sind bei Pumpturbinen nach der Francis-Bauart aus der DE1503279, AT284034, AT248255 und WO2012/059174 Anlagen bekannt, bei denen Hilfsschaufeln zur Verbesserung bzw. Anpassung des Wirkungsgrades bei Pump- bzw. Turbinenbetrieb eingesetzt. Bei Axialturbinen haben diese Hilfsschaufeln keine entsprechende Wirkung. Die CH 175431 offenbart eine Propellerturbine mit einer verschiebbaren schalltricherförmig gewölbten Regulierscheibe, die nach den Leitschaufeln und vor der Turbine angeordnet ist.

Ziel der Erfindung ist es daher die Wirbelbildung im Wasserzulauf von Kaplan-, Rohr-, Diagonal- oder Propellerturbinen zu reduzieren.

Dies erfolgt erfindungsgemäß dadurch, dass im Wasserzulauf zwischen den Leitschaufeln und der Turbine mehrere separate Zusatzschaufeln vorgesehen sind, die durch Öffnungen in den Wasserzulauf einführbar sind. Dadurch kann die Wirbelbildung reduziert und der Normal-Betriebsbereich auch für kleinere Leistungen ausgeweitet werden. Solange die Schaufeln nicht in den Wasserzulauf eingeführt sind, kommt es auch zu keinen Änderungen des Betriebsverhaltens. Bestehende Anlagen können mit diesen Schaufeln nachgerüstet werden und ermöglichen damit einen ausgeweiteten Betrieb.

Die Erfindung ist dadurch gekennzeichnet, dass die Schaufeln einschwenkbar ausgestaltet sind. Dadurch können sie bei Bedarf in einfacher Weise gegebenenfalls auch mittels eines Antriebes in den Wasserzulauf eingeführt werden.

Eine günstige Ausgestaltung der Erfindung ist dadurch gekennzeichnet, dass die Schaufeln einstellbar, insbesondere um ihre Achse drehbar sind. Damit können sie derart eingestellt werden, dass sie gezielt die Strömung beeinflussen und die Wirbelbildung reduzieren.

Eine weitere Ausgestaltung der Erfindung ist dadurch gekennzeichnet, dass mehrere, vorzugsweise 4 bis 8, Zusatzschaufeln am Umfang des Wasserzulaufes angeordnet sind. So kann gegebenenfalls die Strömung in allen Bereichen des Wasserzulaufes beeinflusst werden.

Eine vorteilhafte Ausgestaltung der Erfindung ist dadurch gekennzeichnet, dass zur Verstellung der Zusatzschaufeln Pneumatik- oder Hydraulikzylinder, oder eine elektrisch betriebene Verstellvorrichtung vorgesehen sind. Damit kann das Einführen der Zusatzschaufeln in den Wasserzulauf von einer Leitwarte aus in einfacher Weise gesteuert werden.

Die Erfindung wird im Folgenden anhand der Zeichnungen beispielhaft beschrieben, wobei
Fig. 1 eine erfindungsgemäße Anlage mit einer Kaplanturbine,
Fig. 2 eine erfindungsgemäße Anlage mit einer Rohrturbine,
Fig. 3 a eine erste Variante einer Zusatzschaufel in Seitenansicht,
Fig. 3b eine erste Variante einer Zusatzschaufel in Ansicht III-III gemäß Fig. 3 a
Fig. 4 a eine nicht von der Erfindung umfasste Variante einer Zusatzschaufel mit ausgefahrener Schaufel und
Fig. 4b eine nicht von der Erfindung umfasste Variante mit eingezogener Schaufel darstellt.

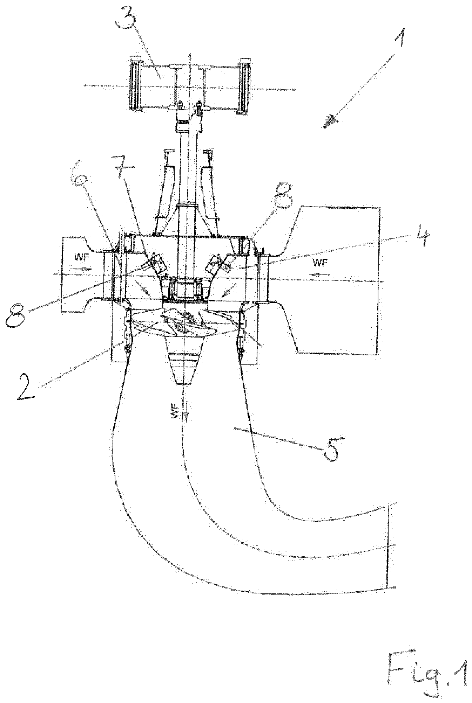

Fig. 1 zeigt eine Anlage zur Energiegewinnung mit einer Wasserturbine 1, die als Kaplanturbine mit einem Kaplanlaufrad 2 ausgeführt ist. Das Laufrad 2 ist mit einer Welle mit einem Generator 3 verbunden. Das Wasser wird hier radial mittels eines Wasserzulaufs 4, der in Form einer Spirale ausgebildet ist, zugeführt. Der Wasserablauf 5 ist mit einem konisch ausgeführten Saugrohr ausgebildet. Der Wasserzulauf 4 erfolgt ausgehend von einer Spirale durch Leitschaufeln 6 hindurch, die im Allgemeinen regelbar ausgestaltet sind. Nach den Leitschaufeln 6 erfolgt eine Umlenkung zum Laufrad 2 hin, wobei der Kanal im oberen Bereich einen Turbinendeckel 7 aufweist. Im Turbinendeckel sind nun Öffnungen vorgesehen, durch die Zusatzschaufeln 8 in den Wasserzulauf 4 eingeführt werden können. In

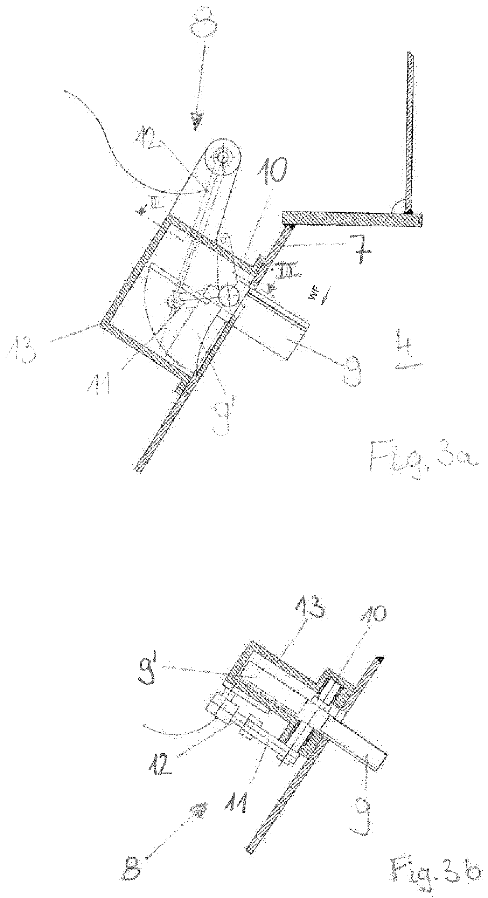

Fig. 1 ist eine erste Variante der Zusatzschaufeln 8 (siehe auch Fig. 3 a und 3b) dargestellt, die in den Wasserzulauf 4 einschwenkbar ist. Über den Umfang des Wasserzulaufes 4 sind dabei vorzugsweise 4 bis 8, Zusatzschaufeln 8 angeordnet. Diese werden nach Bedarf in den Wasserzulauf 4 eingeführt um die Wirbelbildung zu reduzieren. Gegebenenfalls können auch nur ein Teil der Zusatzschaufeln 8 eingeführt oder herausgenommen werden. Das Einführen der Zusatzschaufeln 8 in den Wasserzulauf 4 kann von der Leitwarte aus gesteuert werden. Fig. 1 dient auch beispielhaft für eine Ausführung bei Diagonal- und Propellerturbinen. Diese unterscheidet sich von der in der Skizze Fig. 1 dargestellten Ausführung bei Kaplanturbinen nur dadurch, dass die Form der Laufradschaufeln in der Regel anders ist, und dadurch, dass die Laufradschaufeln nicht verstellbar sind.

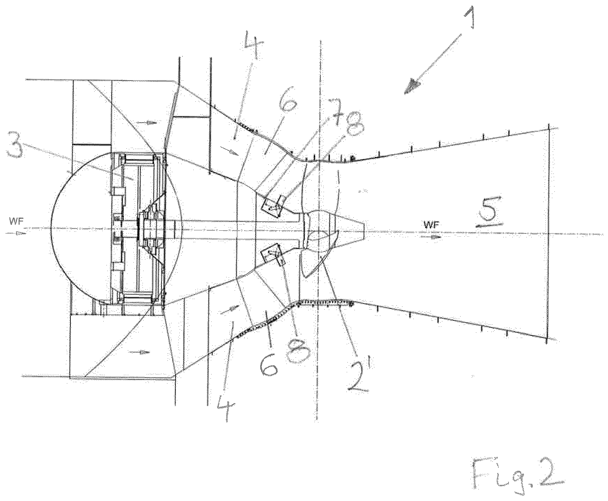

Fig. 2 zeigt eine weitere Variante der Erfindung mit einer Anlage zur Energiegewinnung mit einer Wasserturbine 1, die als Rohrturbine mit einem Axiallaufrad 2' ausgeführt ist. Gleiche Teile werden in weiterer Folge mit gleichen Bezugszeichen versehen. Auch hier ist das Laufrad 2' mittels einer Welle mit einem Generator 3 verbunden. Der Wasserzulauf 4 erfolgt hier durch ein Rohr um den gekapselten Generator herum zur Axialturbine 2'. Im Wasserstrom befinden sich noch Leitschaufeln 6, die regelbar sein können. Nach dem Axiallaufrad 2' erfolgt der Wasserablauf 5 durch ein konisch auseinandergehendes Rohr. An der Wand 7' des Wasserzulaufs 4 sind hier mehrere Zusatzschaufeln 8 angebracht, die wie bei der vorhergehenden Variante durch Öffnungen in den Wasserstrom eingeführt werden können. Auch hier ist die Variante nach Fig. 3 a und 3 b dargestellt. Die Steuerung der Zusatzschaufeln 8 erfolgt analog wie bei einer Anlage nach Fig. 1 in Abhängigkeit der Wirbelbildung.

In den Figuren 3 a und 3 b ist eine erfindungsgemäße Variante der Zusatzschaufeln 8 dargestellt. Das Schaufelblatt 9 ist um eine Achse 10 schwenkbar angeordnet und weist einen Hebel 11 auf. Dieser Hebel 11 ist mit einem Pneumatik- oder Hydraulikzylinder 12, oder einer elektrisch betriebenen Verstellvorrichtung verbunden, durch den das Schaufelblatt 9 aus der ausgeschwenkten Position in eine eingeschwenkte Position (Schaufelblatt 9') gebracht werden kann. Das Einschwenken erfolgt in ein Gehäuse 13, das mit dem Wasserzulauf 4 flüssigkeitsmäßig verbunden und gegenüber der Außenseite abgedichtet ist. In Fig. 3b ist die Ansicht gemäß Linie III-III in Fig. 3 a dargestellt, wobei gut die Lage des Schaufelblatts 9 in ausgeschwenkter Position und in eingeschwenkter Position (9') zu sehen ist. Auch ist erkennbar, dass sich der Verstellmechanismus mit Hebel 11 und Zylinder 12 außerhalb des Gehäuses 13 befindet. Durch die Verwendung von Pneumatik- oder Hydraulikzylindern 12, oder alternativ durch eine elektrische Verstellvorrichtung, kann das Schaufelblatt 9 von der Schaltwarte aus je nach Bedarf eingeschwenkt oder hinausgeschwenkt werden.

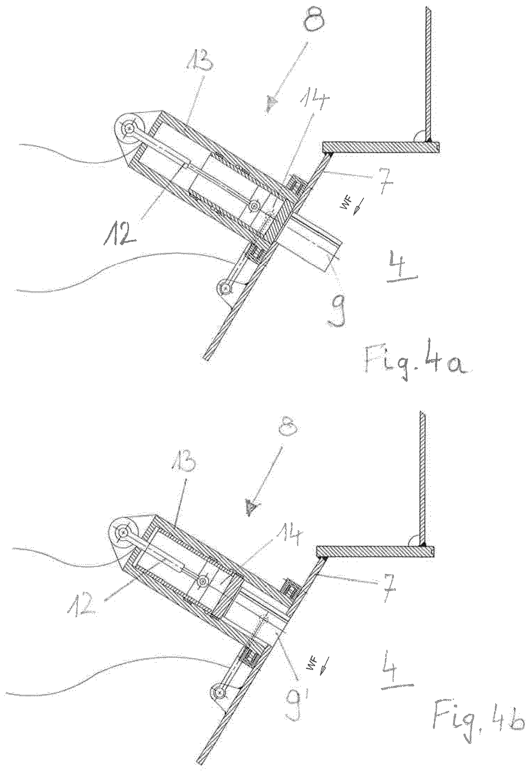

In den Figuren 4 a und 4 b ist eine nicht erfindungsgemäße Variante der Zusatzschaufeln 8 dargestellt, wobei hier das Schaufelblatt 9 in den Wasserzulauf 4 eingeschoben wird. Fig. 4 a zeigt die Position des Schaufelblattes 9 in ausgefahrenem Zustand und Fig. 4b die Position des Schaufelblattes 9' in eingezogenem Zustand. Hier ist erkennbar, dass der Zylinder 12 sich im Gehäuse 13 befindet und gegen das Wasser durch einen Stempel 14 entsprechend abgedichtet werden muss. Durch eine Steuerung der Zylinder 12 von der Schaltwarte aus kann das Schaufelblatt 9 je nach Bedarf ein- oder ausgefahren werden.

Die Erfindung ist nicht auf die Beispiele in den Zeichnungen beschränkt. Es können so andere Antriebe der Schaufelblätter wie z.B. Spindeln vorgesehen sein. Auch können die Zusatzschaufeln im Wasserzulauf an anderer Stelle angeordnet werden.

## Patentansprüche

1. Anlage zur Energiegewinnung mit einer Kaplan-, Rohr-, Diagonal- oder Propellerturbine (1), einem Wasserzulauf (4) und einem Wasserablauf (5) mit Leitschaufeln (6) im Wasserzulauf, wobei im Wasserzulauf (4) zwischen den Leitschaufeln (6) und der Turbine (1) mehrere separate Zusatzschaufeln (8) vorgesehen sind, die durch Öffnungen in den Wasserzulauf (4) einführbar sind, **dadurch gekennzeichnet, dass** die Zusatzschaufeln (8) einschwenkbar ausgestaltet sind.

2. Anlage nach Anspruch 1, **dadurch gekennzeichnet, dass** die Zusatzschaufeln (8) einstellbar, insbesondere um ihre Achse drehbar sind.

3. Anlage nach einem der Ansprüche 1 bis 2, **dadurch gekennzeichnet, dass** mehrere, vorzugsweise 4 bis 8, Zusatzschaufeln (8) am Umfang des Wasserzulaufes (4) angeordnet sind.

4. Anlage nach einem der Ansprüche 1 bis 3, **dadurch gekennzeichnet, dass** zur Verstellung der Zusatzschaufeln (8) Pneumatik-, Hydraulikzylinder (12) oder elektrisch betriebene Verstellvorrichtungen vorgesehen sind.

## Claims

1. Power generation plant with a Kaplan, bulb, diagonal flow or propeller turbine (1), a water intake (4) and a water run-off (5) with guide vanes (6) in the water intake, where several separate, additional vanes (8) that can be inserted into the water intake (4) through openings are provided in the water intake (4) between the guide vanes (6) and the turbine (1), **characterized in that** the additional vanes (8) are designed such that they can be swung in.

2. Plant according to Claim 1, **characterized in that** the additional vanes (8) are adjustable, particularly rotatable around their own axis.

3. Plant according to one of Claims 1 to 2, **characterized in that** several, preferably 4 to 8, additional vanes (8) are arranged around the perimeter of the water intake (4).

4. Plant according to one of Claims 1 to 3, **characterized in that** pneumatic or hydraulic cylinders (12) or an electrically driven adjusting device are provided to adjust the additional vanes (8).

## Revendications

1. Installation de production d'énergie comprenant une turbine (1) à hélice, Kaplan, tubulaire ou à écoulement diagonal, une admission d'eau (4) et une évacuation d'eau (5) avec des ailettes directrices (6) dans l'admission d'eau, dans l'admission d'eau (4) sont disposées entre les ailettes directrices (6) et la turbine (1) plusieurs ailettes supplémentaires séparées (8) qui peuvent être introduites par des ouvertures dans l'admission d'eau (4) **caractérisée en ce que** les ailettes supplémentaires (8) sont conçues pour être orientables.

2. Installation selon la revendication 1, **caractérisée en ce que** les ailettes supplémentaires (8) peuvent être réglables, en particulier peuvent tourner autour de leur axe.

3. Installation selon l'une quelconque des revendications 1 à 2, **caractérisée en ce que** plusieurs ailettes supplémentaires (8), de préférence entre 4 et 8, sont disposées sur la périphérie de l'admission d'eau (4).

4. Installation selon l'une quelconque des revendications 1 à 3, **caractérisée en ce que** le déplacement des ailettes supplémentaires (8) est effectué par des vérins hydrauliques ou pneumatiques (12) ou par des dispositifs de déplacement électriques.
